# EUROPEAN PATENT SPECIFICATION

(11) **EP 4 307 068 B1**
(45) Date of publication and mention of the grant of the patent: **10.06.2026**
(21) Application number: 23181406.2
(22) Date of filing: 26.06.2023
(51) Int. Cl.: G05B 23/02, G07C 5/08

(54) **METHODS AND SYSTEMS FOR GENERATING PREDICTIVE MAINTENANCE INDICATORS FOR A VEHICLE**
VERFAHREN UND SYSTEME ZUR ERZEUGUNG VON PRÄDIKTIVEN WARTUNGSINDIKATOREN FÜR EIN FAHRZEUG
PROCÉDÉS ET SYSTÈMES DE GÉNÉRATION D'INDICATEURS DE MAINTENANCE PRÉDICTIFS POUR UN VÉHICULE

(30) Priority: 12.07.2022 IN 202211039931; 30.08.2022 US 202217823203
(43) Date of publication of application: 17.01.2024
(73) Proprietor: HONEYWELL INTERNATIONAL INC., Charlotte, NC 28202 (US)
(72) Inventor: KOLBET, David, Charlotte 28202 (US); KANKANALA, Ramchandra, Charlotte 28202 (US); VAN DER ZWEEP, Jeff, Charlotte 28202 (US); KADEPPAGARI, Murali, Charlotte 28202 (US); MAHALINGAIAH, Pradeep Kumar, Charlotte 28202 (US); HANNI, Rajavikrama, Charlotte 28202 (US)
(74) Representative: Haseltine Lake Kempner LLP

(56) References cited:
- WO-A1-2021/222384
- US-A1- 2019 066 005

## Description

### CROSS-REFERENCE TO RELATED APPLICATIONS

This application claims the benefit of priority under 35 U.S.C. § 119 from Indian Patent Application No. 202211039931, filed on July 12, 2022.

### TECHNICAL FIELD

Various embodiments of the present disclosure relate generally to predictive maintenance methods and systems for vehicles and, more particularly, to methods and systems for generating predictive maintenance indicators for a vehicle.

### BACKGROUND

The maintenance of vehicles, such as aircraft, is important for the efficient operation of those vehicles, but can be a complicated and expensive process. Vehicles can have a large number of parts and systems that can become damaged or worn, and then malfunction. These system malfunctions and/or part failures can be expensive to repair/replace, take a vehicle out of service, and cause issues should a failure occur during vehicle operation. As a result, it is beneficial to be able to maintain vehicles efficiently, and prior to extensive malfunctions or failures whenever possible. In order to do so, it can be beneficial to employ efforts to predict issues before they become costly or more complex to correct.

Conventional systems for preventative vehicle maintenance generally rely on systems and methods that monitor sensor data and other indications of the vehicle condition, in real time, to identify damaged or failing components. Some efforts have been made to train these systems using previous failure examples and data to improve operating thresholds for various vehicle systems and components. These trained systems typically require significant amounts of data regarding past failures, and are unable to be used effectively on vehicles for which sufficient failure data has not been compiled. The present disclosure is directed to overcoming one or more of these above-referenced challenges.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

Digital twin systems and methods for transportation systems are known from WO 2021/222384.

Methods and apparatus to monitor work vehicles are known from US 2019/066005.

### SUMMARY OF THE DISCLOSURE

According to certain aspects of the disclosure, methods and systems are disclosed for generating predictive maintenance indicators for a vehicle.

The invention is defined by the appended independent claims. Some optional features are defined by the appended dependent claims.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure may be implemented.
FIG. 2 depicts a functional system diagram describing a method for generating an anomaly detection model, according to one or more embodiments.
FIG. 3 depicts a flowchart of a method for identifying signal anomalies, according to one or more embodiments.
FIG. 4 depicts a system process diagram related to the method depicted in the flowchart of FIG. 3, according to one or more embodiments.
FIG. 5 depicts a functional system diagram describing a method for generating a predictive indicator, according to one or more embodiments.
FIG. 6 depicts a flowchart of a method for generating predictive indicators for a vehicle, according to one or more embodiments.
FIG. 7 depicts an example computing system that may execute techniques presented herein.

### DETAILED DESCRIPTION

In general, the present disclosure is directed to methods and systems for generating predictive maintenance indicators for a vehicle using an updated vehicle model. A system of the present disclosure may include a vehicle model that is updated over time to incorporate changes to the vehicle such as the repair, enhancement, and/or replacement of components.

The present disclosure is directed to overcoming one or more of the challenges discussed above. Vehicles can have complicated systems with sensor and control signals that have complex and non-intuitive interactions and relationships. Vehicle management systems can monitor these signals, and even determine those that may be out of range, but by the time a signal has exceeded a predetermined threshold, significant and/or immediate maintenance may require the vehicle to be taken out of operation. The ability to generate predictive indicators for a vehicle can allow issues to be addressed sooner, at more convenient times, and/or with less damage being done to the vehicle.

While this disclosure describes the systems and methods with reference to aircraft, it should be appreciated that the present systems and methods are also applicable to management of other types of vehicles, including those of helicopters, drones, UAVs, UAMs, automobiles, trucks, ships, spacecraft, heavy machinery, or any other manned, unmanned, autonomous and/or Internet-connected vehicle.

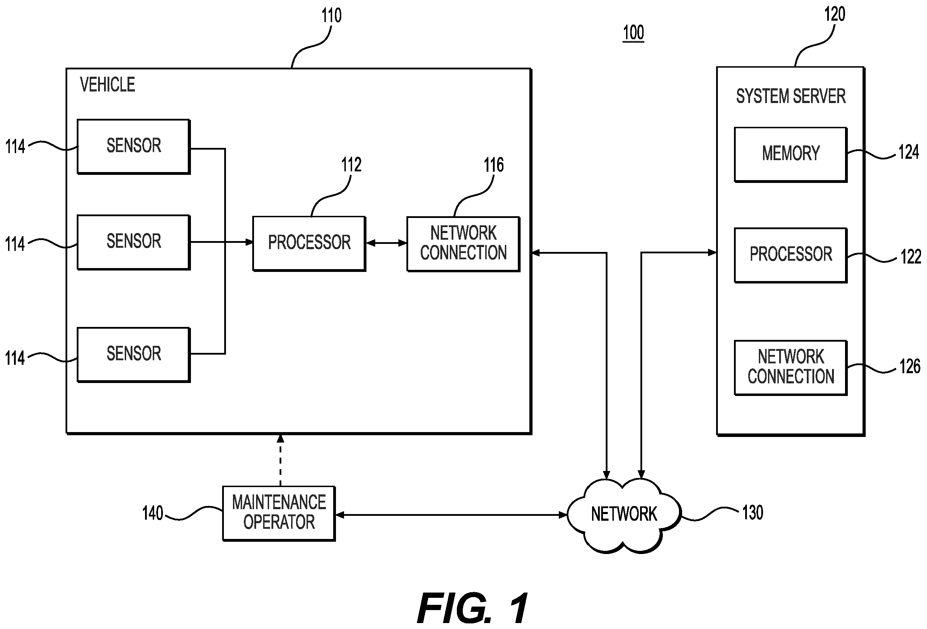

FIG. 1 depicts an example system environment 100 in which methods, systems, and other aspects of the present disclosure may be implemented. The system environment 100 of FIG. 1 may include a vehicle 110, a system server 120, a network 130, and a maintenance operator 140. Vehicle 110 may include processor 112 in communication with a plurality of other components such as one or more sensors 114 and network connection 116. Processor 112 may include one or more processors that comprise the computing and flight management systems of vehicle 110.

Vehicle 110 can include one or more sensors 114 to provide feedback regarding the function, health, position, control or other information relevant to the vehicle. In some embodiments, the one or more sensors 114 may include sensors to monitor one or more of pressure, temperature, position, vibration, force, humidity, voltage, current, continuity, or other suitable devices for providing information regarding the operation of vehicle 110 such as actuation motion characteristics, control surface position, cabin pressure and temperature, fluids and pneumatic characteristics, electrical characteristics, system responsiveness to commands, quantities of fuel, lubricants, and the like.

Vehicle 110 may use network connection 116 to communicate with other elements of the system environment, including system server 120. System server 120 may represent one or more systems tasked with performing or assisting in the performance of one or more of the steps of the disclosed methods for generating predictive maintenance indicators for vehicle 110, and may be remote from and/or onboard vehicle 110. System server 120 may include a processor 122, a memory 124, and a network connection 126. Memory 124 may store data, processor 122 may access and organize the stored data to respond to requests and provide updates to the stored data, and information may be provided to other elements in system environment 100 via network connection 126. In some embodiments, system server may communicate directly with vehicle 110 via one or more wired or wireless protocols and/or via network 130.

Network 130 may be implemented as, for example, the Internet, a wireless network, Bluetooth, Near Field Communication (NFC), or any other type of network or combination of networks that provides communications between one or more components of the system environment 100. In some embodiments, the network 130 may be implemented using a suitable communication protocol or combination of protocols such as a wired or wireless Internet connection in combination with a cellular data network.

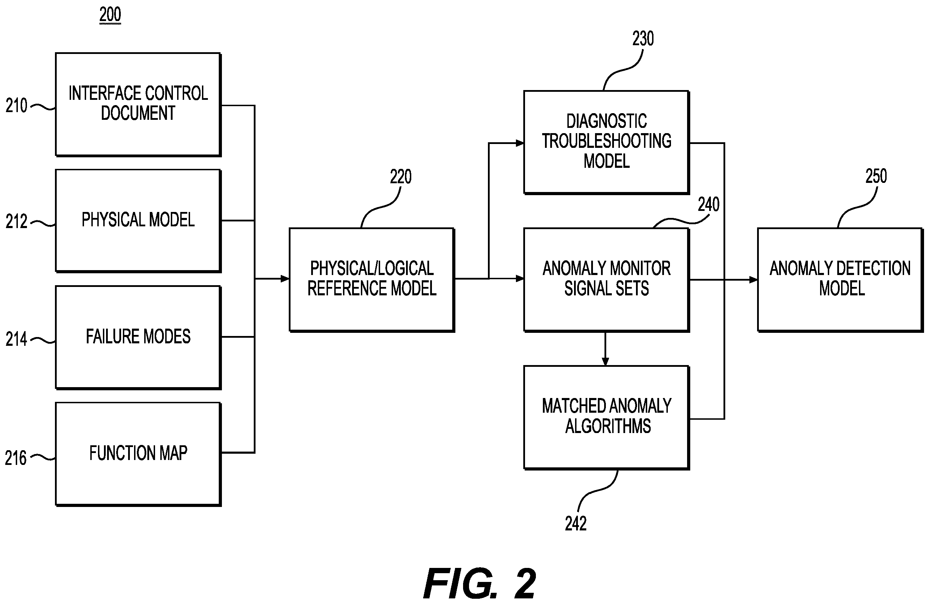

FIG. 2 depicts an example model environment 200 in which methods, systems, and other aspects of the present disclosure may be implemented. In the model environment 200 of FIG. 2, sources of information, such as, an interface control document 210, a physical model 212, failure modes 214, and a function map 216 can be used to generate a physical/logical vehicle system reference model 220. Vehicle system reference model 220 can incorporate information, including interface information, locations of components, known failure modes, and the like, into a cohesive model that can provide a representation of the known relationships between components, signals, processes, and vehicle operations.

Vehicle system reference model 220, in turn, is configured to define a diagnostic troubleshooting model 230 and anomaly monitor signal sets 240. For example, diagnostic troubleshooting model 230 is configured to organize known failure modes and possible solutions, as well as being able to identify other systems and components that could cause or be impacted by a fault or failure. Anomaly monitor signal sets 240, including their matched anomaly algorithms 242, are configured to generate and provide groupings of signals that have the potential to influence one another, and provide context for the manner in which anomalies may develop over time. Each of these elements can contribute to the generation of an anomaly detection model 250 capable of detecting signal anomalies in vehicle systems.

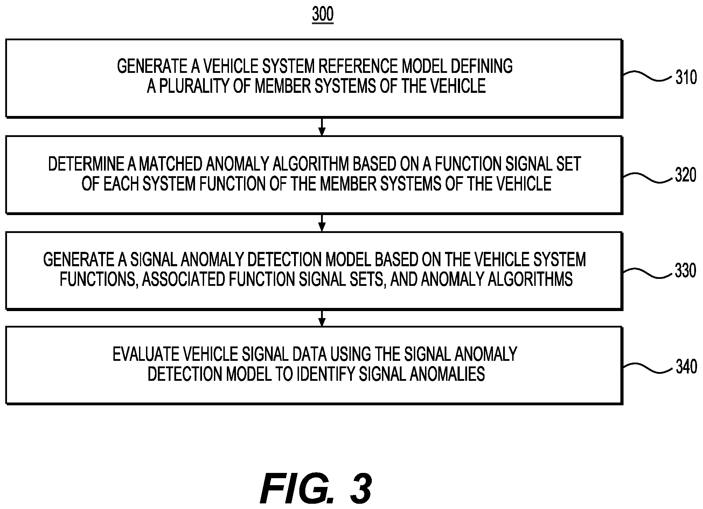

FIG. 3 depicts an exemplary flowchart of a method 300 for detecting signal anomalies in a vehicle, according to one or more embodiments. It should be understood that the steps described herein, and the sequence in which they are presented, are merely illustrative such that additional and/or fewer steps may be included without departing from the scope of the present disclosure.

At step 310, a vehicle system reference model 220 can be generated. This model can define a plurality of member systems of the vehicle, and may be the product of a number of documents and models, for example, interface control document 210, physical model 212, failure modes 214, and/or function map 216, and can include the member systems physical and/or logical interconnectivity. Member systems may be, for example, a vehicle system that communicates with a central maintenance computer, or may be/include other equipment such as sensors and actuators. In some embodiments, vehicle reference model 220 has been previously generated, and need only be retrieved at this stage in method 300. Once the vehicle system reference model 220 is generated and/or retrieved, at step 320, the system may define sets of signals related to a member system or function, and then determine/select a matched anomaly algorithm 242 for each member system and/or function monitor signal set 240. Each signal set 240 can include a number of different signals, for example, signals that are binary, non-linear, scalar, and/or vectors. Matching or selecting an appropriate anomaly algorithm can be important to the anomaly detection process, as each algorithm is configured to detect certain types of variation. These algorithms can include one or more of: support vector machines (SVM), generative adversarial networks (GAN), neural networks, autoencoders, or Bayesian networks.

Due to the complexity of vehicle systems, the identification of an unusual signal in a signal set may not be inherently significant to the overall operation of the vehicle. So at step 330, signal anomaly detection model 250 can be generated based on information such as diagnostic troubleshooting model 230, anomaly monitor signal sets 240, and matched anomaly algorithms 242. Anomaly detection model 250 may be able to not only identify out of range signals, but also to provide the context regarding the significance and possible causes of the signal behavior, identifying those that are more likely to be meaningfully anomalous. For example, an individual signal or signals may be within range, but still may be indicative of an anomaly when considered together.

At step 340, anomaly detection model 250 can be used to evaluate actual or simulated vehicle signal data in order to identify signal anomalies. The anomalies may be logged, ranked, displayed, or otherwise provided for further action or analysis. In some embodiments, the identified signal anomalies can be organized and displayed, for example, as indicia on a graphical user interface (GUI) on a system display. This may allow vehicle operators (including maintenance personnel or other person responsible for one or more aspects of vehicle travel and/or maintenance) to have a real-time or historical visualization of the vehicle signal behavior.

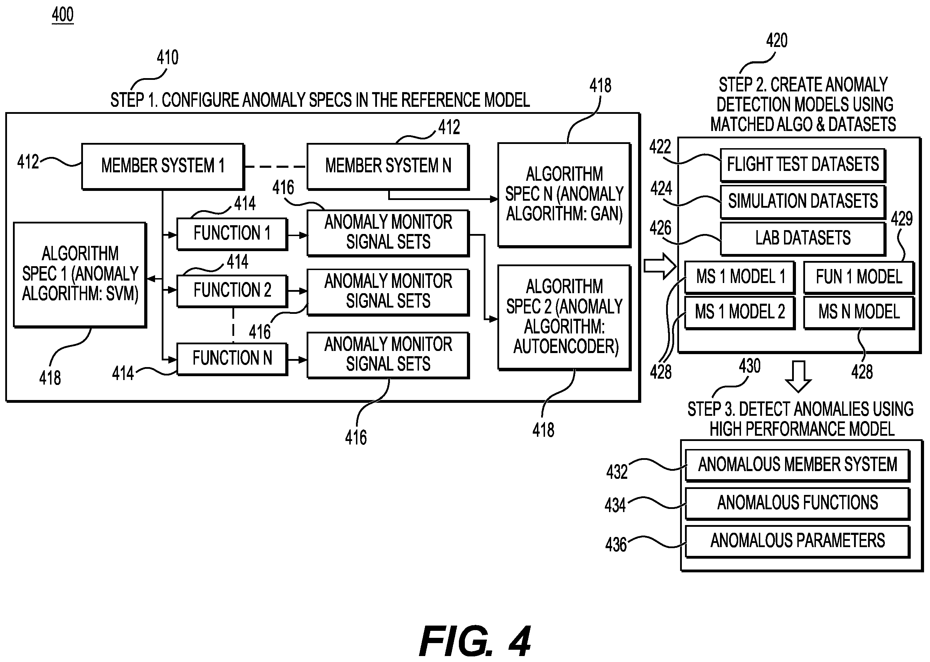

FIG. 4 depicts a system process diagram related to the method depicted in the flowchart of FIG. 3, according to one or more embodiments of the disclosure. Process 400 may begin at Step 1 (410) with the configuration of reference model 220. Reference model 220 may include a number of member systems 412, with some member systems 412 including one or more functions 414. In some embodiments, member systems can include hydraulics, pneumatics, electronics, flight control mechanisms, navigation, environmental systems, entertainment systems, and/or communications, with the capabilities of each member system 412 potentially further defining individual functions 414. Anomaly monitor signal sets 416 may be associated with each function 414 and/or member system 412, and can include individual signals that have a relationship relevant to the operation or failure of a particular member system 412 and/or function 414. As defined, one or more system functions 414 of a particular member system 412 will typically share at least one signal in the function signal set.

In order to allow for modeling and monitoring of the member systems and functions, each anomaly monitor signal set 416 can be assigned an algorithm specification 418. The matched algorithm specifications 418 can help a model, such as a machine learning model, to properly analyze and/or monitor anomaly monitor signal sets 416 by establishing some criteria for the expected relationships between and among signals within signal set 416.

At Step 2 (420), process 400 can proceed to the creation of anomaly detection model 250. Anomaly detection model 250 may itself be comprised of member system models 428 and function models 429. These models, and ultimately anomaly detection model 250, may be trained and refined using one or more datasets, for example, flight test datasets 422, simulation datasets 424, and/or lab datasets 426. In some cases, these datasets may exhibit normal vehicle operation, while in other instances they may include identified failures and/or anomalous behavior. However, training datasets 422, 424, and 426 need not exhibit anomalous behavior or much anomalous behavior to properly train anomaly detection model 250 (including any constituent models 429, 429).

At Step 3 (430), anomaly detection model 250 can begin detecting anomalies in additional training datasets, or in operational datasets, such as data provided in real-time during operation of the vehicle. Anomaly detection model may be able to identify anomalous member systems 432, anomalous functions 434, and/or anomalous vehicle parameters 436. As discussed above, these identified anomalies may then be logged, ranked, displayed, or otherwise provided for further action or analysis.

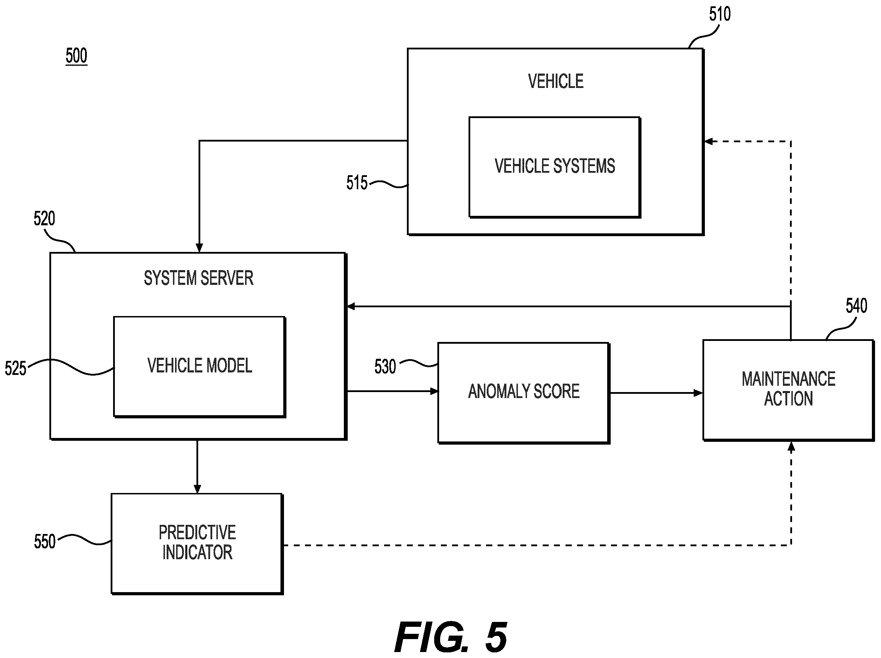

FIG. 5 depicts a functional system diagram describing a method of the present disclosure. System 500 can include a vehicle 510 and a system server 520. Vehicle 510 can include one or more vehicle systems 515, with each system being able to include sub-systems, functions, and signal sets. As vehicle 510 operates, vehicle systems 515 can provide signal data to system server 520.

System server 520 may then monitor the signal data with respect to vehicle model 525 in order to identify anomalies. Analysis of the identified anomalies by system server 520 can result in an anomaly score 530 which can in turn result in the performance of a maintenance action 540 being performed on vehicle 510. In addition to maintenance action 540 being performed on vehicle 510, maintenance action 540 can also be used by system server 520 to update vehicle model 525.

As vehicle model 525 is updated, it may generate one or more predictive indicators 550 for vehicle 510. Predictive indicators 550 may include, for example, a set of one or more parameters that are flagged for monitoring, the detection algorithm that may apply to those parameters, one or more thresholds established for one or more of the parameters being monitored, a potential fault/list of potential faults (which may include an indication of the relative likelihood of each), other statistical or contextual information that may be relevant and/or useful for interpreting predictive indicator 550, and/or the creation or modification of a threshold that can trigger a further notification or recommendation. In some embodiments, predictive indicators 550 can be displayed in a manner that provides an intuitive graphical representation of the elements of predictive indicator 550. For example, a GUI to display predictive indicators 550 may include one or more variables charted over time to demonstrate changes in one or more of the signals, the anomaly scores, the certainty surrounding a recommended action, or other dynamic aspects of predictive indicator 550. These predictive indicators 550 may be configured to take certain actions automatically, such as adjusting an operational parameter of vehicle 510, and/or they may be configured to provide operators/maintenance personnel with warnings or troubleshooting procedures.

In some instances, these predictive indicators 550 may coincide with certain anomalies, but they may also be associated with non-anomalous signal behavior. For example, in the event that signal behavior is trending towards a fault, a predictive indicator may flag those signals, even in advance of a fault or failure occurring. The generation of predictive indicators 550 can result in the performance of maintenance actions 540, even in the absence of a significant anomaly score 530. This ability of system server 520 to indicate maintenance actions 540 for vehicle 510 in advance of significant anomaly scores 530 can allow preventative maintenance to address vehicle system failures before they are flagged for urgent correction.

In some embodiments, including those with complex vehicle systems 515, vehicle model 525 and signal data from vehicle 510 may be used as inputs to train a machine-learning algorithm to aid in the determination of the anomaly scores 530 and/or the indication of maintenance actions 540. The signal data used for this training may be, for example, historic data from previous periods of vehicle operation. In some embodiments, the historic data may be collected from related vehicles, such as the same or similar models of vehicle, or those sharing one or more vehicle systems. In addition to or alternatively, anomaly scores 530, maintenance actions 540, and subsequent signal data from vehicle 510 may be used as inputs to train a machine learning algorithm to aid in the identification of predictive indicators for the vehicle.

As used herein, a "machine learning model" is a model configured to receive input, and apply one or more of a weight, bias, classification, or analysis on the input to generate an output. The output may include, for example, a classification of the input, an analysis based on the input, a design, process, prediction, or recommendation associated with the input, or any other suitable type of output. A machine learning model is generally trained using training data, e.g., experiential data and/or samples of input data, which are fed into the model in order to establish, tune, or modify one or more aspects of the model, e.g., the weights, biases, criteria for forming classifications or clusters, or the like. Aspects of a machine learning model may operate on an input linearly, in parallel, via a network (e.g., a neural network), or via any suitable configuration.

The execution of the machine learning model may include deployment of one or more machine learning techniques, such as linear regression, logistical regression, random forest, gradient boosted machine (GBM), deep learning, and/or a deep neural network. Supervised and/or unsupervised training may be employed. For example, supervised learning may include providing training data and labels corresponding to the training data. Unsupervised approaches may include clustering, classification or the like. K-means clustering or K-Nearest Neighbors may also be used, which may be supervised or unsupervised. Combinations of K-Nearest Neighbors and an unsupervised cluster technique may also be used. Any suitable type of training may be used, e.g., stochastic, gradient boosted, random seeded, recursive, epoch or batch-based, etc.

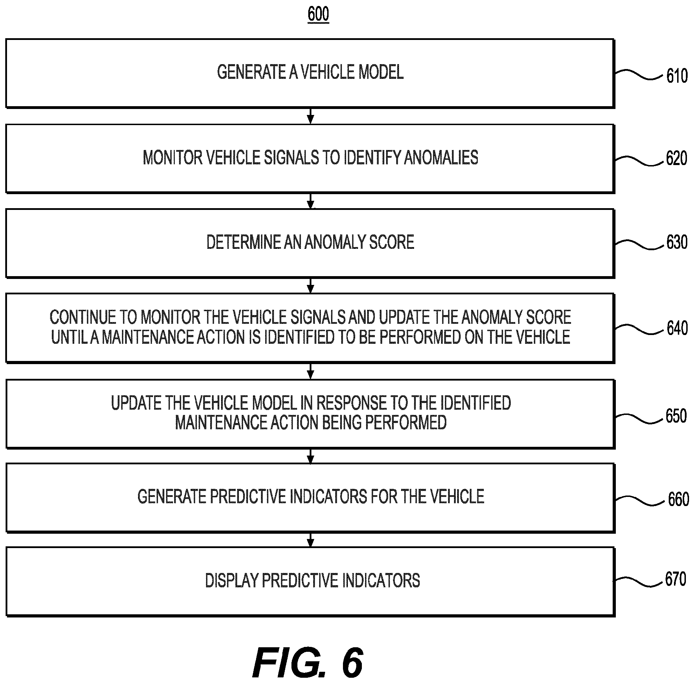

FIG. 6 depicts an exemplary flowchart of a method 600 for generating predictive maintenance indicators for a vehicle, such as vehicle 110, according to one or more embodiments.

At step 610, a vehicle model is generated. This model can define expected relationships among and between vehicle signals related to vehicle systems that are monitored by system server 120. The expected relationships between the vehicle signals may be based on design specifications, simulation data, and/or a vehicle system reference model. Each vehicle system can include functions, components, and/or sets of signals that relate to an aspect of the vehicle. The relationships one would expect between the signals may be based on the structure, programming, and/or physical properties of the vehicle.

For an illustrative example, two such relationships could be that when a control signal indicates a desire for movement of a control surface in a direction that should cause the vehicle to increase its speed (i.e., moving a fly-by-wire throttle forward), an expected relationship of the vehicle model may predict a signal from a throttle position sensor will change by a certain amount (i.e., the throttle may move from 30% to 50%), and that a vehicle speed sensor signal will change at a predictable rate (i.e., the vehicle will accelerate at a rate related to the power output of the engine, the weight of the vehicle, and other relevant factors). Because a vehicle may have hundreds or thousands of signals and signal relationships, and each of those signals may change multiple times each second, the vehicle model is needed to represent those relationships.

Once the vehicle model is generated, at step 620, the system monitors vehicle signals during vehicle operation or following vehicle operation in order to identify anomalies. The expected signal relationships of the vehicle model can be compared in real time or at a later time to the actual relationship between those signals, with variations from the expected relationships being identified as anomalous. Building upon the illustrative example discussed above, in the event that a control signal to increase the vehicle speed is monitored, but the vehicle speed sensor does not detect a predicted corresponding increase in vehicle speed, then an anomaly may be identified.

Due to the complexity of vehicle systems, the mere identification of an anomaly may not be significant to the overall operation of the vehicle. So at step 630, the system analyzes the anomalies from the vehicle model in order to determine the significance or magnitude of one or more anomalies, represented by an anomaly score. The anomaly score is based on a degree or frequency of the identified anomalies relative to the expected relationships of the vehicle model. This anomaly score can also take a number of additional circumstances into account, including how the anomalies relate to other expected relationships, whether the anomalies have been previously analyzed by the system, and other such relevant context.

Again building on the illustrative example, in the event that a vehicle speed sensor is not indicating an expected increase in vehicle speed for a given control input, analysis may indicate that other vehicle speed indicators are demonstrating the expected behavior, therefore suggesting that there may be an issue with the vehicle speed sensor, and scoring that anomaly accordingly. The analysis may also take into account external and/or environmental factors, for example, the expected vehicle speed may not fully account for wind, temperature, turbulence, terrain, or other such factors, but they may also be relevant to the overall anomaly analysis. In another context, that same anomaly may be analyzed as more significant when it occurs in concert with another detected anomaly relating to a brake being engaged when it should not be according to the control inputs monitored. With the potential for large numbers of anomalies of varying degrees being analyzed each second, the anomaly score may represent the anomalies in a larger context that is more reflective of the practical significance to the operation of the vehicle.

At step 640, the system will continue to monitor the vehicle signals and update the anomaly scores on an ongoing basis. In some instances this continued monitoring will not indicate a significant enough anomaly score to recommend that the vehicle operation be adjusted, ceased, or otherwise modified. However, once an anomaly rises to the level of indicating the need for a corrective action, such as the performance of a maintenance action, the system can provide that indication to one or more vehicle maintenance operators.

In the illustrative example, the anomalous vehicle speed signal may rise to a level where replacement is indicated. In such an instance, the system may provide an indication to the vehicle operators and/or maintenance operators that the vehicle speed sensor may need replacement at an appropriate time. The maintenance operators can then proceed to replace the sensor.

In response to an adjustment or maintenance action being performed, at step 650, the vehicle model is updated to adjust one or more expected signal relationships. These adjustments to the model may include redefining the relationships to account for a change related to the maintenance action. For example, the replacement or recalibration of a sensor may cause the system to update the vehicle model to expect a different signal relationship and/or the maintenance performed may adjust the vehicle model's expectation with regard to a particular wear part failure. Even if the vehicle model update does not require the expected signal relationships to change significantly, the vehicle model is still able to have a record of the maintenance action performed, and the system can then monitor the vehicle signals with this record associated with an appropriate vehicle system, system function, and/or sensor signal.

As steps 620, 630, 640, and 650 are repeated, at step 660, the system generates predictive indicators for the vehicle. These predictive indicators may take different forms, but their purpose is to use the updated vehicle to identify potential non-anomalous or low anomaly scored events that may precede the need for a corrective and/or maintenance action to be performed. The predictive indicators are displayed on a vehicle display for one or more vehicle operators.

Returning to the illustrative example, the system may generate a predictive indicator for the failure of the vehicle speed sensor that is capable of identifying non-anomalous behavior that tends to precede the anomalous signals monitored during total failure of the sensor. This can result in improvements to the quality and quantity of preventative maintenance actions taken at more convenient times, therefore allowing a vehicle to remain in service for a greater proportion of the time.

Another illustrative example may relate to the hydraulic system of a vehicle. The system may define the member system to include signals related to one or more of: a hydraulic reservoir, one or more valves, one or more pumps, one or more pressure sensors, and positional feedback for one or more hydraulic components (e.g., landing gear, brakes). Based on expected relationships between these signals (e.g., power being supplied to the pump should raise the pressure by a certain amount), an algorithm can be determined to fit the signal set. The anomaly detection model can be generated and applied to the signals or the member system to detect anomalous signals. For example, even though a pressure threshold may not be exceeded, the system may determine that a pressure sensor in a particular position is providing a signal that is lower than expected, given a pump control input voltage, and may be able to determine the likelihood of a pump failure or leak in the system. When maintenance personnel replaces a component, such as the pump, the vehicle model can be updated to reflect that the pump has been changed out, so that the system may be able to determine that continuing instances of low pressure are more likely to be caused by something other than the pump.

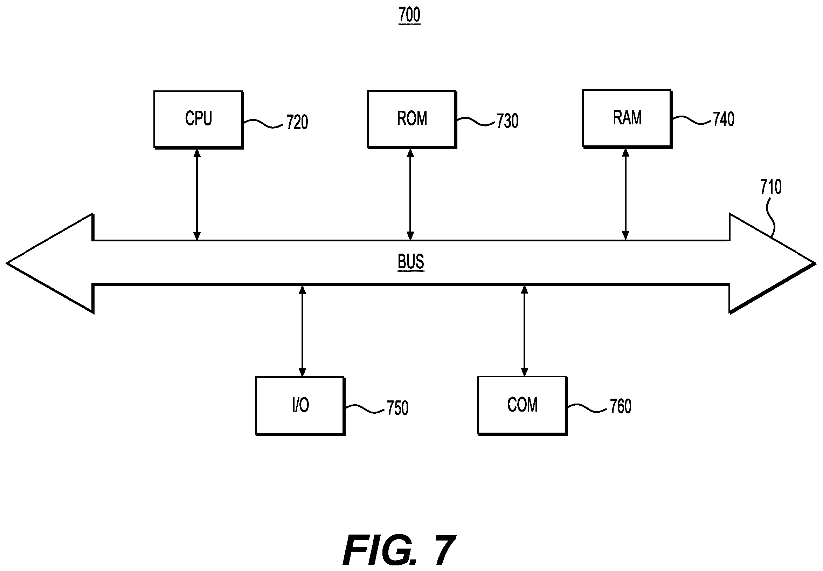

FIG. 7 depicts an example system that may execute techniques presented herein. FIG. 7 is a simplified functional block diagram of a computer that may be configured to execute techniques described herein, according to exemplary embodiments of the present disclosure. Specifically, the computer (or "platform" as it may not be a single physical computer infrastructure) may include a data communication interface 760 for packet data communication. The platform may also include a central processing unit ("CPU") 720, in the form of one or more processors, for executing program instructions. The platform may include an internal communication bus 710, and the platform may also include a program storage and/or a data storage for various data files to be processed and/or communicated by the platform such as ROM 730 and RAM 740, although the system 700 may receive programming and data via network communications. The system 700 also may include input and output ports 750 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus.

In this disclosure, relative terms, such as, for example, "about," "substantially," "generally," and "approximately" are used to indicate a possible variation of ±10% in a stated value.

The term "exemplary" is used in the sense of "example" rather than "ideal." As used herein, the singular forms "a," "an," and "the" include plural reference unless the context dictates otherwise.

Other embodiments of the disclosure will be apparent to those skilled in the art from consideration of the specification and practice of the invention disclosed herein. It is intended that the specification and examples be considered as exemplary only, with the invention being indicated by the following claims.

## Claims

1. A method (300) of generating predictive indicators for a vehicle (110, 510), comprising:
generating (310, 610) a vehicle reference model (220) defining a plurality of member systems (412) of the vehicle, the plurality of member systems including one or more of: hydraulics, pneumatics, electronics, flight control mechanisms, navigation, environmental systems, entertainment systems, or communications, each of the plurality of member systems including one or more system functions (414) of a plurality of vehicle system functions, wherein the one or more system functions of a member system share at least one signal in a function signal set (416) associated with each respective system function;
determining (320), for each system function, an anomaly algorithm (418) based on the function signal set associated with each respective system function;
generating (330) a signal anomaly detection model (250) based on the plurality of vehicle system functions, associated function signal sets, and anomaly algorithms;
monitoring and evaluating (340, 620) vehicle signal data received from the vehicle, using the signal anomaly detection model, to determine one or more signal anomalies present in one or more of the one or more system functions of the vehicle;
determining an anomaly score (630) based on a degree or frequency of the one or more signal anomalies;
continuing monitoring (640) the vehicle signal data and updating the anomaly score until a maintenance action (510) is identified to be performed on the vehicle;
updating (650) the vehicle reference model in response to the identified maintenance action being performed;
generating (660) one or more predictive indicators (550) for the vehicle based on the one or more anomalies and one or more changes in the one or more anomalies subsequent to updating the vehicle reference model after performance of the identified maintenance action; and
displaying (670) the one or more generated predictive indicators for the vehicle to one or more vehicle operators.

2. The method of claim 1, wherein the vehicle reference model is generated based at least in part on a physical vehicle model (212) that includes information regarding physical connectivity of one or more components of the vehicle.

3. The method of claim 1, wherein the anomaly algorithms include one or more of: support vector machines (SVM), generative adversarial networks (GAN), neural networks, autoencoders, or Bayesian networks.

4. The method of claim 1, further comprising training the signal anomaly detection model to identify signal anomalies present in one or more system functions of the vehicle based on training data that includes information regarding predicted signal behavior from one or more vehicle simulations.

5. The method of claim 1, wherein monitoring the plurality of vehicle signals includes monitoring the plurality of vehicle signals during operation of the vehicle.

6. The method of claim 1, wherein displaying the one or more predictive indicators includes generating a graphical user interface that can display indicia that provides an indication of a significance level of the one or more predictive indicators.

7. A system for generating predictive indicators for a vehicle, the system comprising:
at least one memory (730, 740) storing instructions; and
at least one processor (720) executing the instructions to perform a process including:
generating (310, 610) a vehicle reference model (220) defining a plurality of member systems (412) of the vehicle, the plurality of member systems including one or more of: hydraulics, pneumatics, electronics, flight control mechanisms, navigation, environmental systems, entertainment systems, or communications, each of the plurality of member systems including one or more system functions (414) of a plurality of vehicle system functions, wherein the one or more system functions of a member system share at least one signal in a function signal set (416) associated with each respective system function;;
determining (320), for each system function, an anomaly algorithm (418) based on the function signal set associated with each system function;
monitoring (340, 620) vehicle signal data received from the vehicle and evaluating the vehicle signal data, using the anomaly algorithms for each system function, to determine one or more signal anomalies present in one or more of the one or more system functions of the vehicle;
continuing monitoring (640) the vehicle signal data until a maintenance action (510) is identified to be performed on the vehicle;
updating (650) the vehicle reference model in response to the identified maintenance action being performed;
generating (660) one or more predictive indicators (550) for the vehicle based on the one or more signal anomalies and one or more changes in the one or more anomalies after performance of the identified maintenance action; and
displaying (670) the one or more predictive indicators for the vehicle to one or more vehicle operators.

8. The system of claim 7, wherein the vehicle reference model is generated based at least in part on a physical vehicle model (212) that includes information including physical connectivity of one or more components of the vehicle.

## Patentansprüche

1. Verfahren (300) zum Erzeugen von prädiktiven Indikatoren für ein Fahrzeug (110, 510), umfassend:
Erzeugen (310, 610) eines Fahrzeugreferenzmodells (220), das eine Vielzahl von Teilsystemen (412) des Fahrzeugs definiert, wobei die Vielzahl von Teilsystemen eines oder mehrere von Folgendem beinhalten: Hydraulik, Pneumatik, Elektronik, Flugsteuermechanismen, Navigation, Umweltsysteme, Unterhaltungssysteme oder Kommunikation, wobei jedes der Vielzahl von Teilsystemen eine oder mehrere Systemfunktionen (414) einer Vielzahl von Fahrzeugsystemfunktionen beinhalten, wobei die eine oder die mehreren Systemfunktionen eines Teilsystems mindestens ein Signal in einem Funktionssignalsatz (416) teilen, der jeder jeweiligen Systemfunktion zugeordnet ist;
Bestimmen (320), für jede Systemfunktion, eines Anomaliealgorithmus (418) auf Basis des Funktionssignalsatzes, der jeder jeweiligen Systemfunktion zugeordnet ist;
Erzeugen (330) eines Signalanomaliedetektionsmodells (250) auf Basis der Vielzahl von Fahrzeugsystemfunktionen, zugeordneten Funktionssignalsätzen und Anomaliealgorithmen;
Überwachen und Beurteilen (340, 620) von Fahrzeugsignaldaten, die von dem Fahrzeug empfangen werden, unter Verwendung des Signalanomaliedetektionsmodells, um eine oder mehrere Signalanomalien zu bestimmen, die in einer oder mehreren der einen oder der mehreren Systemfunktionen des Fahrzeugs vorliegen;
Bestimmen eines Anomalie-Scores (630) auf Basis eines Grades oder einer Frequenz der einen oder der mehreren Signalanomalien;
Weiterüberwachen (640) der Fahrzeugsignaldaten und Aktualisieren des Anomalie-Scores, bis eine Wartungsmaßnahme (510) identifiziert wird, die an dem Fahrzeug durchzuführen ist;
Aktualisieren (650) des Fahrzeugreferenzmodells als Antwort darauf, dass die identifizierte Wartungsmaßnahme durchgeführt wird;
Erzeugen (660) eines oder mehrerer prädiktiver Indikatoren (550) für das Fahrzeug auf Basis der einen oder der mehreren Anomalien und einer oder mehrerer Änderungen an der einen oder den mehreren Anomalien anschließend an das Aktualisieren des Fahrzeugreferenzmodells nach Durchführung der identifizierten Wartungsmaßnahme; und
Anzeigen (670) des einen oder der mehreren erzeugten prädiktiven Indikatoren für das Fahrzeug an einen oder mehrere Fahrzeugbediener.

2. Verfahren nach Anspruch 1, wobei das Fahrzeugreferenzmodell auf Basis mindestens teilweise eines physischen Fahrzeugmodells (212) erzeugt wird, das Informationen in Bezug auf eine physische Konnektivität einer oder mehrerer Komponenten des Fahrzeugs beinhaltet.

3. Verfahren nach Anspruch 1, wobei die Anomaliealgorithmen eines oder mehrere von Folgendem beinhalten: Support-Vector-Machines (SVM), Generative-Adversarial-Networks (GAN), neuronale Netze, Autokodierer oder Bayessche Netze.

4. Verfahren nach Anspruch 1, ferner umfassend Trainieren des Signalanomaliedetektionsmodells, um Signalanomalien zu identifizieren, die in einer oder mehreren Systemfunktionen des Fahrzeugs vorliegen, auf Basis von Trainingsdaten, die Informationen in Bezug auf vorhergesagtes Signalverhalten aus einer oder mehreren Fahrzeugsimulationen beinhalten.

5. Verfahren nach Anspruch 1, wobei das Überwachen der Vielzahl von Fahrzeugsignalen das Überwachen der Vielzahl von Fahrzeugsignalen während eines Betriebs des Fahrzeugs beinhaltet.

6. Verfahren nach Anspruch 1, wobei das Anzeigen des einen oder der mehreren prädiktiven Indikatoren das Erzeugen einer graphischen Benutzerschnittstelle beinhaltet, die Markierungen anzeigen kann, die eine Angabe eines Signifikanzniveaus des einen oder der mehreren prädiktiven Indikatoren bereitstellt.

7. System zum Erzeugen prädiktiver Indikatoren für ein Fahrzeug, das System umfassend:
mindestens einen Speicher (730, 740), der Anweisungen speichert; und
mindestens einen Prozessor (720), der die Anweisungen ausführt, um einen Prozess durchzuführen, der Folgendes beinhaltet:
Erzeugen (310, 610) eines Fahrzeugreferenzmodells (220), das eine Vielzahl von Teilsystemen (412) des Fahrzeugs definiert, wobei die Vielzahl von Teilsystemen eines oder mehrere von Folgendem beinhalten: Hydraulik, Pneumatik, Elektronik, Flugsteuermechanismen, Navigation, Umweltsysteme, Unterhaltungssysteme oder Kommunikation, wobei jedes der Vielzahl von Teilsystemen eine oder mehrere Systemfunktionen (414) einer Vielzahl von Fahrzeugsystemfunktionen beinhalten, wobei die eine oder die mehreren Systemfunktionen eines Teilsystems mindestens ein Signal in einem Funktionssignalsatz (416) teilen, der jeder jeweiligen Systemfunktion zugeordnet ist;
Bestimmen (320), für jede Systemfunktion, eines Anomaliealgorithmus (418) auf Basis des Funktionssignalsatzes, der jeder Systemfunktion zugeordnet ist;
Überwachen (340, 620) von Fahrzeugsignaldaten, die von dem Fahrzeug empfangen werden, und Beurteilen der Fahrzeugsignaldaten unter Verwendung des Anomaliealgorithmus für jede Systemfunktion, um eine oder mehrere Signalanomalien zu bestimmen, die in einer oder mehreren der einen oder der mehreren Systemfunktionen des Fahrzeugs vorliegen;
Weiterüberwachen (640) der Fahrzeugsignaldaten, bis eine Wartungsmaßnahme (510) identifiziert wird, die an dem Fahrzeug durchzuführen ist;
Aktualisieren (650) des Fahrzeugreferenzmodells als Antwort darauf, dass die identifizierte Wartungsmaßnahme durchgeführt wird;
Erzeugen (660) eines oder mehrerer prädiktiver Indikatoren (550) für das Fahrzeug auf Basis der einen oder der mehreren Signalanomalien und einer oder mehrerer Änderungen an der einen oder den mehreren Anomalien nach Durchführung der identifizierten Wartungsmaßnahme; und
Anzeigen (670) des einen oder der mehreren prädiktiven Indikatoren für das Fahrzeug an einen oder mehrere Fahrzeugbediener.

8. System nach Anspruch 7, wobei das Fahrzeugreferenzmodell auf Basis mindestens teilweise eines physischen Fahrzeugmodells (212) erzeugt wird, das Informationen beinhaltet, die eine physische Konnektivität von einer oder mehreren Komponenten des Fahrzeugs beinhalten.

## Revendications

1. Procédé (300) de génération d'indicateurs prédictifs pour un véhicule (110, 510), comprenant :
la génération (310, 610) d'un modèle de référence de véhicule (220) définissant une pluralité de systèmes membres (412) du véhicule, la pluralité de systèmes membres incluant un ou plusieurs parmi : des systèmes hydrauliques, pneumatiques, électroniques, des mécanismes de commandes de vol, des systèmes de navigation, des systèmes environnementaux, des systèmes de divertissement ou des systèmes de communication, chacun de la pluralité de systèmes membres incluant une ou plusieurs fonctions de système (414) parmi une pluralité de fonctions de système de véhicule, dans lequel les une ou plusieurs fonctions de système d'un système membre partagent au moins un signal dans un ensemble de signaux de fonctions (416) associé à chaque fonction de système respective ;
la détermination (320), pour chaque fonction de système, d'un algorithme d'anomalies (418) sur la base de l'ensemble de signaux de fonctions associé à chaque fonction de système respective ;
la génération (330) d'un modèle de détection d'anomalies de signaux (250) sur la base de la pluralité de fonctions de système de véhicule, d'ensembles de signaux de fonctions associés et d'algorithmes d'anomalies ;
la surveillance et l'évaluation (340, 620) de données de signaux de véhicule reçues du véhicule, au moyen du modèle de détection d'anomalies de signaux, pour déterminer une ou plusieurs anomalies de signaux présentes dans une ou plusieurs parmi les une ou plusieurs fonctions de système du véhicule ;
la détermination d'un score d'anomalies (630) sur la base d'un degré ou d'une fréquence des une ou plusieurs anomalies de signaux ;
la surveillance continue (640) des données de signaux de véhicule et la mise à jour du score d'anomalies jusqu'à identification d'une opération de maintenance (510) à réaliser sur le véhicule ;
la mise à jour (650) du modèle de référence de véhicule en réponse à la réalisation de l'opération de maintenance identifiée ;
la génération (660) d'un ou plusieurs indicateurs prédictifs (550) pour le véhicule sur la base des une ou plusieurs anomalies et des un ou plusieurs changements dans les une ou plusieurs anomalies suite à la mise à jour du modèle de référence de véhicule après la réalisation de l'opération de maintenance identifiée ; et
l'affichage (670) des un ou plusieurs indicateurs prédictifs générés pour le véhicule à destination d'un ou plusieurs opérateurs de véhicule.

2. Procédé selon la revendication 1, dans lequel le modèle de référence de véhicule est généré sur la base au moins en partie d'un modèle de véhicule physique (212) qui inclut des informations concernant la connectivité physique d'un ou plusieurs composants du véhicule.

3. Procédé selon la revendication 1, dans lequel les algorithmes d'anomalies incluent un ou plusieurs parmi : machines à vecteurs de support (SVM), réseaux antagonistes génératifs (GAN), réseaux neuronaux, auto-encodeurs ou réseaux bayésiens.

4. Procédé selon la revendication 1, comprenant en outre l'entraînement du modèle de détection d'anomalies de signaux pour identifier des anomalies de signaux présentes dans une ou plusieurs fonctions de système du véhicule sur la base de données d'entraînement qui incluent des informations concernant un comportement de signal prévu à partir d'une ou plusieurs simulations de véhicule.

5. Procédé selon la revendication 1, dans lequel la surveillance de la pluralité de signaux de véhicule inclut la surveillance de la pluralité de signaux de véhicule pendant le fonctionnement du véhicule.

6. Procédé selon la revendication 1, dans lequel l'affichage des un ou plusieurs indicateurs prédictifs inclut la génération d'une interface utilisateur graphique qui peut afficher des indices qui donnent une indication d'un niveau de signification des un ou plusieurs indicateurs prédictifs.

7. Système de génération d'indicateurs prédictifs pour un véhicule, le système comprenant :
au moins une mémoire (730, 740) stockant des instructions ; et
au moins un processeur (720) exécutant les instructions pour réaliser un processus incluant :
la génération (310, 610) d'un modèle de référence de véhicule (220) définissant une pluralité de systèmes membres (412) du véhicule, la pluralité de systèmes membres incluant un ou plusieurs parmi : des systèmes hydrauliques, pneumatiques, électroniques, des mécanismes de commandes de vol, des systèmes de navigation, des systèmes environnementaux, des systèmes de divertissement ou des systèmes de communication, chacun de la pluralité de systèmes membres incluant une ou plusieurs fonctions de système (414) parmi une pluralité de fonctions de système de véhicule, dans lequel les une ou plusieurs fonctions de système d'un système membre partagent au moins un signal dans un ensemble de signaux de fonctions (416) associé à chaque fonction de système respective ;
la détermination (320), pour chaque fonction de système, d'un algorithme d'anomalies (418) sur la base de l'ensemble de signaux de fonctions associé à chaque fonction de système ;
la surveillance (340, 620) de données de signaux de véhicule reçues du véhicule et l'évaluation des données de signaux de véhicule, au moyen des algorithmes d'anomalies pour chaque fonction de système, pour déterminer une ou plusieurs anomalies de signaux présentes dans une ou plusieurs parmi les une ou plusieurs fonctions de système du véhicule ;
la surveillance continue (640) des données de signaux de véhicule jusqu'à identification d'une opération de maintenance (510) à réaliser sur le véhicule ;
la mise à jour (650) du modèle de référence de véhicule en réponse à la réalisation de l'opération de maintenance identifiée ;
la génération (660) d'un ou plusieurs indicateurs prédictifs (550) pour le véhicule sur la base des une ou plusieurs anomalies de signaux et des un ou plusieurs changements dans les une ou plusieurs anomalies après la réalisation de l'opération de maintenance identifiée ; et
l'affichage (670) des un ou plusieurs indicateurs prédictifs pour le véhicule à destination des un ou plusieurs opérateurs de véhicule.

8. Système selon la revendication 7, dans lequel le modèle de référence de véhicule est généré sur la base au moins en partie d'un modèle de véhicule physique (212) qui inclut des informations incluant la connectivité physique d'un ou plusieurs composants du véhicule.
